# EUROPEAN PATENT SPECIFICATION

(11) **EP 0 686 283 B1**
(45) Date of publication and mention of the grant of the patent: **02.01.1997**
(21) Application number: 94909728.1
(22) Date of filing: 25.02.1994
(51) Int. Cl.: G06F 11/16, G06F 11/18, G06F 1/12, G06F 15/16

(54) **SYNCHRONIZATION ARBITRATION TECHNIQUE AND APPARATUS**
VERFAHREN UND GERAET ZUR SYNCHRONISATIONSARBITRIERUNG
TECHNIQUE ET APPAREIL D'ARBITRAGE DE SYNCHRONISATION

(30) Priority: 26.02.1993 US 23657
(43) Date of publication of application: 13.12.1995
(73) Proprietor: HONEYWELL INC., Minneapolis Minnesota 55408 (US)
(72) Inventor: SMITH, Frederick, L., Largo, FL 34644 (US)
(74) Representative: Herzbach, Dieter, Dipl.-Ing.
(86) International application number: US9401831
(87) International publication number: WO9419744

(56) References cited:
- EP-A- 0 316 087
- WO-A-85/05707
- US-A- 3 761 884
- US-A- 4 644 498

## Description

### FIELD OF THE INVENTION

The present invention relates generally to synchronization of multiple redundant computers and more particularly to an improved hardware synchronization arbitration technique which includes hierarchial selection of a sync master computer.

### BACKGROUND OF THE INVENTION

In some fault tolerant computing applications it is desirable to organize a plurality of computers as channels of a redundant computer system. In most of these fault tolerant computing applications it also is desirable to detect and isolate a faulty computer by a technique conventionally called voting. Voting can be accomplished either internally in each computer by utilizing software routines or by utilizing dedicated hardware.

In either technique, voting among the redundant computers requires an exchange of data between the computers. The data exchange is greatly facilitated if the computers are synchronized to some degree. In general, dedicated hardware voting requires greater synchronization than does software voting, because software voting can more readily accept and manipulate data from the computers with attributes such as timing data.

Further complicating the synchronization technique is the requirement for hardware selection of the sync master computer from the plurality of redundant computers. The selection is desired to be accomplished in the order in which the computers are activated, so that if only one computer is activated it will be able to operate in a stand alone configuration. This selection allows the first activated computer to retain the sync master status even if additional computers subsequently are activated. The sync master status is retained as long as the sync master computer is functioning properly, i.e. activated and operating normally with no fault indications. It also is preferable that the plurality of redundant computers has a fixed hardware ranking or hierarchy, such that upon simultaneous activation, the highest ranking computer will become the sync master. Further, if a computer is operating as the sync master and a higher ranking computer later is activated, then the sync master status is retained by the lower ranking computer.

The present invention therefore was developed to achieve a dedicated hardware synchronization arbitration technique with a fixed hierarchial selection.

### SUMMARY OF THE INVENTION

The present invention is directed to a hierarchial selection hardware synchronization arbitration technique. A plurality of redundant computers each include a sync master counter, which is set to reflect the hierarchial selection of each computer. The sync master counter will be inhibited if a sync master signal is present when the computer is activated or if a sync activity signal is present from a higher ranking computer. The computers each have a physical ranking to achieve the hierarchial selection. The computers otherwise can be identical. If the sync master computer generates a fault signal or a fault is detected, then the hierarchial selection of the remaining computers is again commenced.

This and other objects are solved in an advantageous manner basically by applying the features laid down in independent claim 1. Further enhancements are provided by the subclaims.

These and other features and advantages of the invention will be more readily apparent upon reading the following description of a preferred exemplified embodiment of the invention and upon reference to the accompanying drawings wherein:

### BRIEF DESCRIPTION OF THE DRAWINGS

FIGURES 1A and 1B are a schematic diagram of one embodiment of a sync priority counter of the present invention; and
FIGURE 2 is a block diagram of one redundant four computer system incorporating the synchronization arbitration technique of the present invention.

While the invention will be described and disclosed in connection with certain preferred embodiments and procedures, it is not intended to limit the invention to those specific embodiments. Rather it is intended to cover all such alternative embodiments and modifications as fall within the scope of the invention as claimed.

### DESCRIPTION OF THE PREFERRED EMBODIMENT

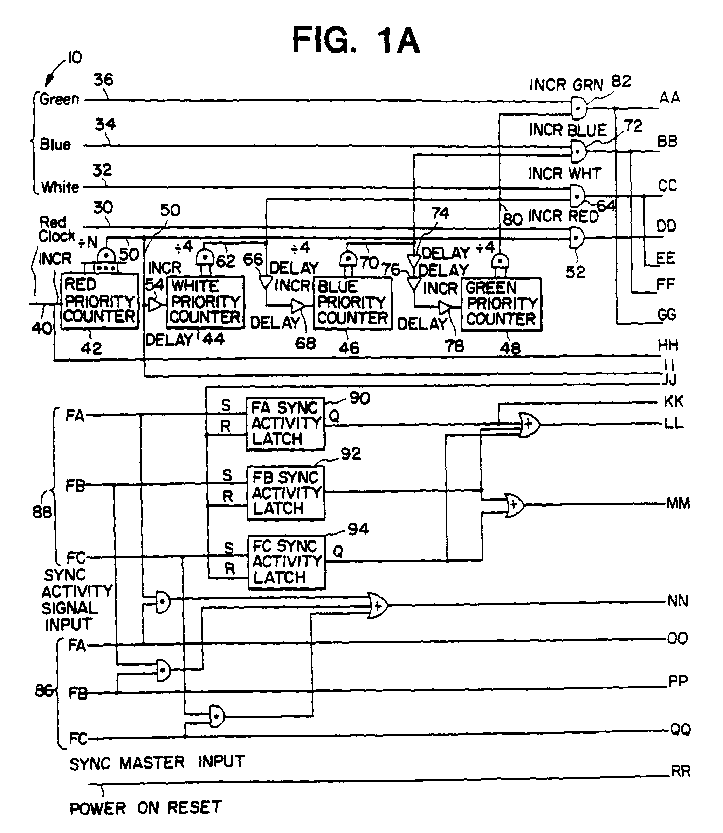

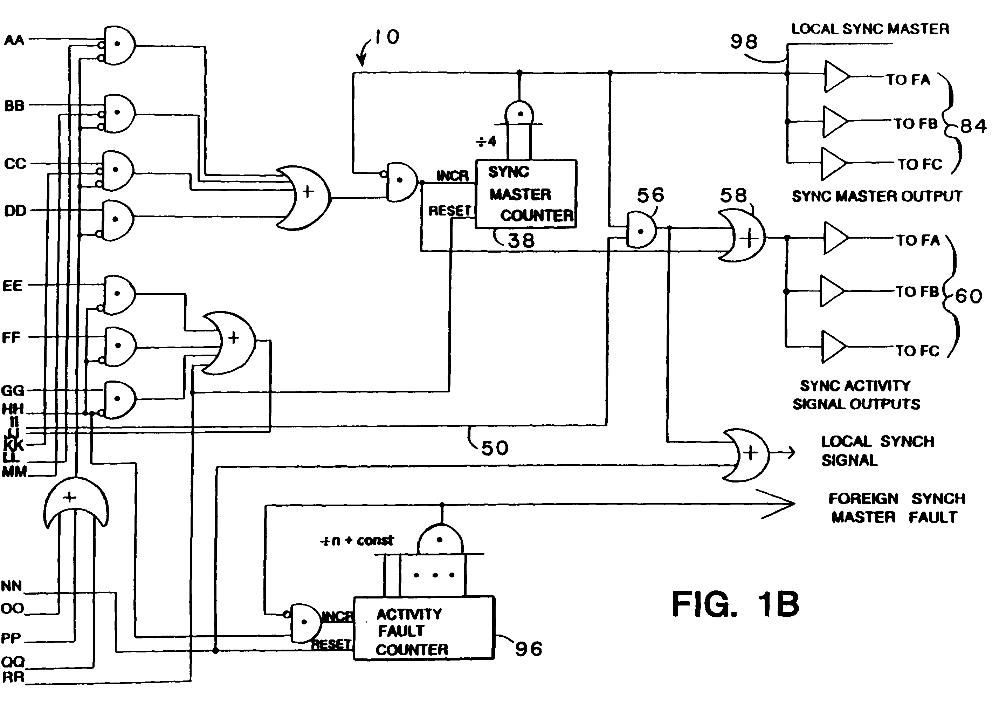

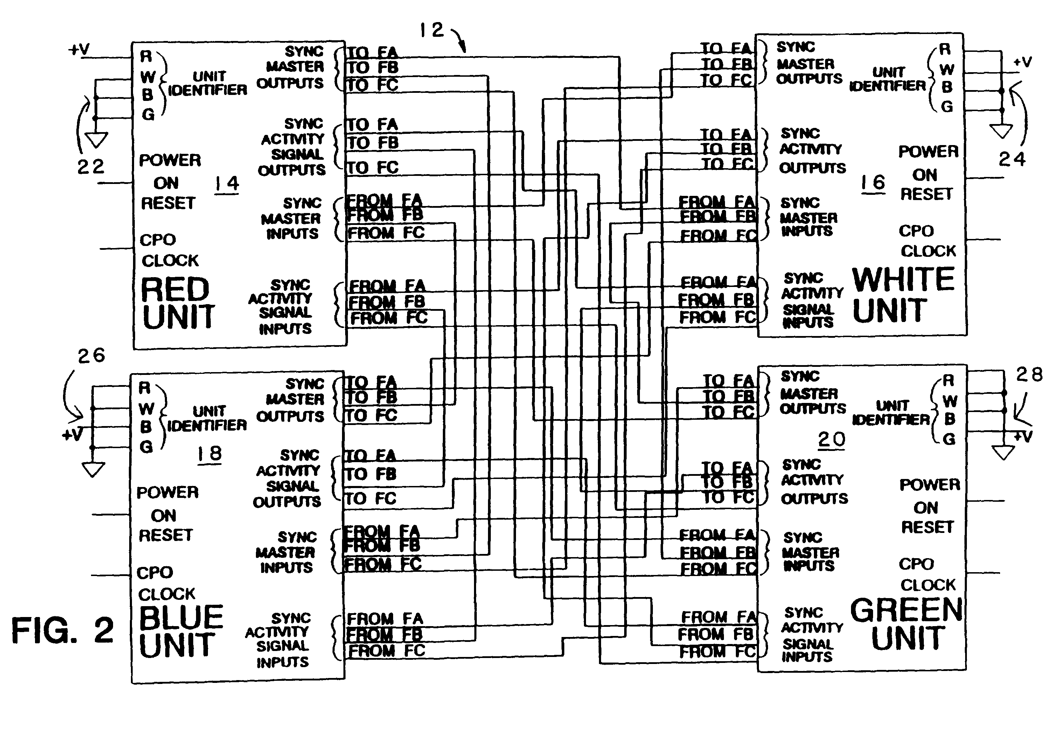

Referring to FIGS. 1A and 1B, one schematic diagram embodiment of a sync priority counter of the present invention is designated generally by the reference numeral 10. For example purposes, a four computer system 12 (FIG. 2) is described utilizing a hierarchial color ranking of RED 14, WHITE 16, BLUE 18 and GREEN 20. The present invention can be scaled up for more computers or down for less computers, as desired. Although not shown, a power on reset signal is presumed to be present that will reset all counters and latches to zero (or reset) upon initial application of power.

In the hierarchial selection, the RED computer 14 is the highest ranking computer and the GREEN computer 20 is the lowest ranking computer. The ranking of the four computers 14, 16, 18 and 20 correspond to a ranking of one, two, three and four respectively, with one being the highest ranking.

The four computers can be identical in configuration and any one can be designated as the RED, WHITE, BLUE or GREEN computer. The designation is accomplished by external jumper wires, illustrated in FIG. 2. The RED computer 14 has a jumper wire set 22, which designates the computer 14 as the RED computer and grounds the other designators. In a like manner, the WHITE computer 16 has a jumper wire set 24, which designates the computer 16 as the WHITE computer. The BLUE computer 18 has a jumper wire set 26, which designates the computer 18 as the BLUE computer. The GREEN computer 20 has a jumper wire set 28, which designates the computer 20 as the GREEN computer. Each of the redundant computers in a system must have a unique jumper wire termination to ensure correct operation of the system.

A "logical address" is required for each of computers in addition to the "physical address" provided by the jumper sets and the subsequent color designation. A logical addressing scheme can be derived by making the four computers 14, 16, 18 and 20 be the vertices of a tetrahedron and the lines of communication, which are the logical addresses, as being the edges. One such scheme is illustrated in the following Table I.

**TABLE I**

| FOREIGN vs. LOCAL DESIGNATIONS | | | |
|---|---|---|---|
| LOCAL | FOREIGN A | FOREIGN B | FOREIGN C |
| Red | White | Blue | Green |
| White | Red | Green | Blue |
| Blue | Green | Red | White |
| Green | Blue | White | Red |

The computer interconnections are not numbered for ease of description, but instead are lettered FA (Foreign A), FB (Foreign B) and FC (Foreign C) in accordance with Table I. Each of the computers 14, 16, 18 and 20 receive and send the respective sync signals, which are generated in the sync priority counter 10 as described, again referring to FIGS. 1A and 1B.

The sync priority counter 10 is configured identically for each of the computers 14, 16, 18 and 20, with the exception of the specific jumper wire sets. as illustrated in FIG. 2. Thus, although not illustrated, only one of a RED line 30, a WHITE line 32, a BLUE line 34 or a GREEN line 36 will be active, while the other three will be grounded by the specific jumper wire set 22, 24, 26 or 28, respectively.

In order for the sync priority counter 10 to become the sync master, the sync priority counter 10 must increment a sync master counter unit 38 to a count of four (4). The sync priority counter 10 receives a master clock pulse (CLOCK) on a line 40. The clock pulse must be the same frequency and phase, i.e., coherent, for each of the four computers to ensure the proper operation of the system 12. The required coherent clock pulses can be obtained from a device that is generally referred to as a fault tolerant clock. The clock pulse utilized to increment the unit 38 is controlled by a combination of prescaling counters and the unit identifier lines 30, 32, 34 and 36.

The sync priority counter 10 includes four prescaling counters, a RED prescaling counter 42, a WHITE prescaling counter 44, a BLUE prescaling counter 46 and a GREEN prescaling counter 48. The RED prescaling counter 42 is driven directly by the master clock pulse (CLOCK). The RED prescaling counter 42 divides the CLOCK signal by an appropriate amount, such as four (4). For example, the CLOCK signal is 256 Hz, which the RED prescaling counter 42 outputs as a 64 Hz signal on a line 50. The signal on the line 50 is coupled to a gate 52, which if enabled by the line 30, will couple the signal pulses to the unit 38, if not inhibited as hereinafter described.

The signal on the line 50 also is coupled to the WHITE prescaling counter 44 via delay network 54. The delay network 54 further ensures that the highest ranking computer will become the sync master. The signal on the line 50 also is coupled to a pair of gates 56, 58 to be output as the Sync Activity Signal Output 60 on a plurality of lines to the other computers, as designated, provided sync master counter 38 has incremented to the required count of 4. After the delay, the WHITE prescaling counter 44 divides the signal on the line 50 by four (4) and outputs a 16 Hz signal on a line 62.

The signal on the line 62 is coupled to a gate 64, like the gate 52, and to the BLUE prescaling counter 46 via a pair of delay networks 66, 68. The signal on the line 62 is divided again by four (4) after the two delay increments and output by the BLUE prescaling counter 46 on a line 70 as a 4 Hz signal.

The signal on the line 70 is coupled to a gate 72 and via three delay networks 74, 76 and 78 to the GREEN prescaling counter 48. The GREEN prescaling counter 48 again divides the signal by four (4) after the three delay increments and outputs a 1 Hz signal on a line 80 which is coupled to a gate 82.

The sync master counter unit 38 in each computer can therefore increment at a rate corresponding to its hierarchial standing as shown in Table II.

**TABLE II**

| HIERARCHIAL COUNTING RATE | |
|---|---|
| UNIT | INCREMENT RATE |
| RED | 64 |
| WHITE | 16 |
| BLUE | 4 |
| GREEN | 1 |

When the unit 38 has been incremented four times, the unit 38 outputs a Sync Master Output 84 signal. The unit 38 can be inhibited from counting under two conditions. The first condition is receipt of a Sync Master Input Signal 86 from a foreign computer. The second condition is receipt of a Sync Activity Input Signal 88 from a higher ranking computer.

A sync master signal 84 is generated and transmitted to the foreign units whenever the sync master counter unit 38 reaches a count of 4. A sync activity signal 60 is generated each time the sync master counter unit 38 is incremented. In addition, once a computer 14, 16, 18 or 20 has been declared sync master, the sync master signal which corresponds to the real time interrupt is treated as a sync activity signal.

The sync master counter 38 in the RED unit will stop incrementing only if a foreign sync master is declared. The sync master counter 38 in the WHITE unit will stop incrementing if a foreign sync master is declared or if a RED sync activity signal is detected. The sync master counter 38 in the BLUE unit will stop incrementing if a foreign sync master is declared or if it detects either a RED or a WHITE sync activity signal. The sync master counter 38 in the GREEN unit will stop incrementing if a foreign sync master is declared or if it detects a sync activity signal from any of the foreign computers.

This technique guarantees that a sync master will evolve from the system 12 even if only one of the four computers 14, 16, 18 or 20 are active. The technique further guarantees that the highest ranking active computer will become the sync master if all the computers are activated essentially simultaneously, i.e., within a few milliseconds of each other. The RED computer 14 can become the sync master in fifteen (15) milliseconds in this example. It would take the WHITE computer 16 sixty-two (62) milliseconds, the BLUE computer 18 two hundred and fifty (250) milliseconds and the GREEN computer 20 a full second.

As above stated, all the priority counters 44, 46 and 48 except the RED prescaling counter 42 have various delay networks in their increment signal. The WHITE prescaling counter 44 has one (1), the BLUE prescaling counter 46 has two (2) and the GREEN prescaling counter 48 has three (3). This further ensures that should two computers simultaneously seek to be the sync master, that the higher ranking one will prevail since its count will lead the lower ranking computer's count by a time corresponding to the delay value. Each computer leads its next lower ranking unit by one (1) delay interval.

A plurality of sync activity latches 90, 92 and 94 are utilized to remember if a foreign activity signal 88 has been received between priority counter outputs. Again the rate at which these latches 90, 92 and 94 are reset is determined by the hierarchial designation of the local computer.

A failure of a foreign sync master is determined by an activity fault counter 96. The fault counter 96 is required to count up to a value slightly higher than what the basic real time interrupt rate would require. The counter 96 is reset each time a foreign sync master signal 86 is received. If the reset signal is not received before the counter 96 achieves the required value a sync master fault is indicated. The local computer does not monitor itself in the event it is the sync master, as indicated by the Local Sync Master signal 98.

If a foreign sync master fault is detected, a signal equivalent to the power on reset is generated by an external logic circuit (not illustrated), which will cause the sync master arbitration process to start all over. In this event the active counter with the highest hierarchial ranking among the active computers is guaranteed to be the new sync master. This process will be repeated for subsequent failures of the sync master.

The present invention provides an unambiguous synchronization control sync master signal 84 that will be present without regard to how many computers within the system 12 are activated. If only one computer is activated, it will become its own sync master. If additional computers are subsequently activated they will accept the first computer as being the sync master and accept its signal. If several computers are activated essentially simultaneously the higher ranking computer in a hierarchial sense will become the sync master.

The technique of the present invention provides an unambiguous synchronizer for a multiple computer system. The present invention permits operating the computers in harmony so that the data can be exchanged at will and such that corresponding inputs and outputs can be voted by external hardware as a way of fault detection. The present invention ensures that an unambiguous sync master will always result and that if two or more computers are attempting to become the sync master at the same time (i.e., on the same clock pulse) that the lower ranking computers will always yield to the highest ranking computer.

Modification and variations of the present invention are possible in light of the above teachings. It is therefore to be understood that within the scope of the appended claims, the invention may be practiced other than is specifically described.

The embodiments of an invention in which an exclusive property or right is claimed are defined as follows:

## Claims

1. An improved synchronization arbitration apparatus including a plurality of redundant computers, characterized by:
means (22, 24, 26, 28) for physically identifying and ranking each of the computers in a hierarchial order;
priority counting means (42, 44, 46, 48) in each of said computers, each priority counting means including means for generating a count related to its hierarchial ranking;
means (38) for counting each of said counts and generating a sync master signal after a predetermined number of said counts; and
means (60) for coupling a first one of said sync master signals to each of said other computers for inhibiting the generation of any other sync master signal.

2. The apparatus as defined in claim 1 further characterized by means (56) for generating a sync activity signal from each said priority counting means and coupling said sync activity signal to each of said other computers for inhibiting the generating of a sync master signal from any lower ranking computer.

3. The apparatus as defined in claim 1 further characterized by means (96) for generating a sync fault signal if said sync master signal is terminated and for restarting said priority counting means in said remaining computers.

4. The apparatus as defined in claim 1 further characterized by each said priority counting means include the same number of counters as the number of redundant computers, each counter generating a count of a different hierarchial ranking and means for enabling only one of said counters in each computer to generate said sync master signal.

5. The apparatus as defined in claim 4 further characterized by each said lower ranking counter includes means (54, 66, 68, 74, 76, 78) for delaying said count generation from said count generation in the next highest ranking counter.

6. The apparatus as defined in claim 1 further characterized by means (56) for generating a sync activity signal from each said priority counting means and coupling said sync activity signal to each of said other computers for inhibiting the generating of a sync master signal from any lower ranking computer, means (96) for generating a sync fault signal if said sync master signal is terminated and for restarting said priority counting means in said remaining computers, each said priority counting means including the same number of counters as the number of redundant computers, each counter generating a count of a different hierarchial ranking and means (52, 64, 72, 82) for enabling only one of said counters in each computer to generate said sync master signal and each said lower ranking counter including means (54, 66, 68, 74, 76, 78) for delaying said count generation from said count generation in the next highest ranking counter.

## Patentansprüche

1. Verbesserte Synchronisations-Arbitriervorrichtung mit mehreren redundanten Computern, **gekennzeichnet durch**:
Einrichtungen (22,24,26,28) zur physikalischen Identifikation und Einreihung eines jeden Computers in eine hierarchische Reihenfolge;
Prioritäts-Zähleinrichtungen (42,44,46,48) in jedem Computer, wobei jede Prioritätszähleinrichtung Einrichtungen zur Erzeugung eines Zählstandes umfaßt, der auf die hierarchische Reihenfolge bezogen ist;
eine Einrichtung (38) zur Zählung eines jeden Zählstandes und zur Erzeugung eines Synchronisations-Mastersignales nach einer vorbestimmten Anzahl von Zählständen; und
eine Einrichtung (60) zur Kopplung eines ersten der Synchronisations-Mastersignale zu jedem anderen Computer für die Sperrung der Erzeugung irgendeines anderen Synchronisations-Mastersignales.

2. Vorrichtung nach Anspruch 1, ferner **gekennzeichnet durch** eine Einrichtung (56) zur Erzeugung eines Synchronisations-Aktivitätssignales durch jede Prioritäts-Zähleinrichtung und Kopplung des Synchronisations-Aktivitätssignales zu jedem anderen Computer, um die Erzeugung eines Snychronisations-Mastersignales von irgendeinem niedriger eingereihten Computer zu sperren.

3. Vorrichtung nach Anspruch 1, ferner **gekennzeichnet durch** eine Einrichtung (96) zur Erzeugung eines Synchronisations-Fehlersignales, wenn das Synchronisations-Mastersignal beendet ist und zum erneuten Start der Prioritäts-Zähleinrichtung in den verbleibenden Computern.

4. Vorrichtung nach Anspruch 1, ferner **dadurch gekennzeichnet**, daß jede Prioritäts-Zähleinrichtung die gleiche Anzahl von Zählern wie die Anzahl der redundanten Computer umfaßt, wobei jeder Zähler einen Zählstand einer unterschiedlichen hierarchischen Reihenfolge erzeugt und durch eine Einrichtung zur Freigabe von nur einem Zähler in jedem Computer, um das Synchronisations-Mastersignal zu erzeugen.

5. Vorrichtung nach Anspruch 4, ferner **gekennzeichnet dadurch**, daß jeder niedriger eingestufte Zähler Einrichtungen (54,66,68,74,76,78) umfaßt, um die Zählstandserzeugung gegen die Zählstandserzeugung des nächst höher eingereihten Zählers zu verzögern.

6. Vorrichtung nach Anspruch 1, ferner **gekennzeichnet durch** eine Einrichtung (56) zur Erzeugung eines Synchronisations-Aktivitätssignales durch jede Prioritäts-Zähleinrichtung und Kopplung des Synchronisations-Aktivitätssignales zu jedem anderen Computer, um die Erzeugung eines Synchronisations-Mastersignales von einem niedriger eingereihten Computer zu sperren, eine Einrichtung zur Erzeugung eines Synchronisations-Fehlersignales, wenn das Synchronisations-Mastersignal beendet ist und zum erneuten Start der Prioritäts-Zähleinrichtung in den verbleibenden Computern, wobei jede Prioritäts-Zähleinrichtung die gleiche Anzahl von Zählern wie die Anzahl der redundanten Computer umfaßt, jeder Zähler einen Zählstand einer unterschiedlichen hierarchischen Reihenfolge erzeugt und Einrichtungen (52,64,72,82) vorgesehen sind, um nur einen der Zähler in jedem Computer für die Erzeugung des Synchronisations-Mastersignales freizugeben und wobei jeder niedriger eingestufte Zähler Einrichtungen (54,66,68,74,76,78) umfaßt, um die Zählstandserzeugung gegenüber der Zählstandserzeugung in dem nächst höher eingestuften Zähler zu verzögern.

## Revendications

1. Appareil d'arbitrage et de synchronisation amélioré comprenant une pluralité d'ordinateurs redondants, caractérisé par:
des moyens (22, 24, 26, 28) pour identifier physiquement et classer chacun des ordinateurs dans un ordre hiérarchique;
des moyens de comptage de priorité (42, 44, 46, 48) dans chacun desdits ordinateurs, chaque moyen de comptage de priorité comprenant un moyen pour produire un comptage ayant rapport à son classement hiérarchique;
des moyens (38) pour compter chacun desdits comptages et produire un signal maître de synchronisation après un nombre prédéterminé desdits comptages; et
des moyens (60) pour coupler un premier signal desdits signaux maître de synchronisation auxdits autres ordinateurs pour empêcher la production de tout autre signal maître de synchronisation.

2. Appareil selon la revendication 1, caractérisé de plus par des moyens (56) pour produire un signal d'activité de synchronisation à partir de chaque dit moyen de comptage de priorité et pour coupler ledit signal d'activité de synchronisation à chacun desdits autres ordinateurs pour empêcher la production d'un signal maître de synchronisation par tout ordinateur de rang inférieur.

3. Appareil selon la revendication 1, caractérisé de plus par des moyens (96) pour produire un signal de défaut de synchronisation si ledit signal maître de synchronisation est terminé et pour redémarrer lesdits moyens de comptage de priorité dans lesdits ordinateurs restants.

4. Appareil selon la revendication 1, caractérisé de plus en ce que chaque dit moyen de comptage de priorité comprend le même nombre de compteurs que le nombre d'ordinateurs redondants, chaque compteur produisant un comptage d'un classement hiérarchique différent et des moyens pour ne permettre qu'à un seul desdits compteurs dans chaque ordinateur de produire ledit signal maître de synchronisation.

5. Appareil selon la revendication 4, caractérisé de plus en ce que chaque compteur de classement inférieur comprend des moyens (54, 66, 68, 74, 76, 78) pour retarder ladite production de comptage par rapport à ladite production de comptage dans le compteur de classement immédiatement supérieur.

6. Appareil selon la revendication 1, caractérisé de plus par des moyens (56) pour produire un signal d'activité de synchronisation à partir de chaque moyen de comptage de priorité et pour coupler ledit signal d'activité de synchronisation à chacun desdits autres ordinateurs pour empêcher la production d'un signal maître de synchronisation provenant de tout ordinateur de rang inférieur, des moyens (96) pour produire un signal de défaut de synchronisation si ledit signal maître de synchronisation est terminé et pour redémarrer lesdits moyens de comptage de priorité dans lesdits ordinateurs restants, chaque dit moyen de comptage de priorité comprenant le même nombre de compteurs que le nombre d'ordinateurs redondants, chaque compteur produisant un comptage d'un classement hiérarchique différent et des moyens (52, 64, 72, 82) pour ne permettre qu'à un seul desdits compteurs dans chaque ordinateur de produire ledit signal maître de synchronisation et chaque dit compteur de classement inférieur comprenant des moyens (54, 66, 68, 74, 76, 78) pour retarder ladite production de comptage par rapport à ladite production de comptage dans le compteur de classement immédiatement supérieur.
